Europäisches Patentamt

European Patent Office

Office européen des brevets

(11) Veröffentlichungsnummer: **0 269 955**

**A2**

(12) **EUROPÄISCHE PATENTANMELDUNG**

(21) Anmeldenummer: 87117088.2

(22) Anmeldetag: 19.11.87

(51) Int. Cl.⁴: **G05D 23/20** , **A47J 27/62**

(30) Priorität: 05.12.86 DE 3641659

(43) Veröffentlichungstag der Anmeldung:
08.06.88 Patentblatt 88/23

(84) Benannte Vertragsstaaten:
AT BE CH DE ES FR GB GR IT LI LU NL SE

(71) Anmelder: **Convotherm-Elektrogeräte GmbH**
**Talstrasse 35**
**D-8111 Untereglfing(DE)**

(72) Erfinder: **Schwarzbaecker Werner Dipl.Ing.**
**Kerschgarten 3**
**8111 Untereglfing(DE)**

(74) Vertreter: **Zmyj, Erwin, Dipl.-Ing.**
**Rosenheimer Strasse 52**
**D-8000 München 80(DE)**

(54) **Vorrichtung zur Wärmebehandlung von Substanzen, insbesondere Nahrungsmitteln.**

㊗ Die Vorrichtung (1) zur Wärmebehandlung von Nahrungsmitteln weist einen an einem Kabel (11) befestigten Fühler (14) beispielsweise zur Feststellung der Kerntemperatur von Nahrungsmitteln auf. Dieses Kabel (11) ist durch eine Kabeldurchführung (12) hindurchgeführt, die in dem der Anschlagseite (2a) zugewandten Bereich von einem vorzugsweise möglichst hoch gelegenen Punkt des Gerätes herunterhängend hindurchgeführt ist, wobei der Fühler (14) im Falle des Nichtgebrauchs in einen Halter (15) an der Beschickungstür (3) einsteckbar ist.

Fig.1

EP 0 269 955 A2

Xerox Copy Centre

## Vorrichtung zur Wärmebehandlung von Substanzen, insbesondere Nahrungsmitteln

Die Erfindung bezieht sich auf eine Vorrichtung zur Wärmebehandlung von Substanzen, insbesondere Nahrungsmitteln, mit einem Fühler zur Regelung zumindest eines der Parameter eines Wärmeträgers, z.B. der Temperatur, der Menge oder der Strömungsgeschwindigkeit, insbesondere mit einem in die Substanz einführbaren Kerntemperaturfühler sowie mit einer außerhalb des für die Substanzen vorgesehenen Innenraums angeordneten Regelvorrichtung, die mit dem Fühler mittels eines Kabels verbunden ist, wobei der Innenraum durch eine Beschickungstür verschließbar ist.

Bei Vorrichtungen dieser Art (DE-OS 29 17 214) hat man den Fühler, der aus der Trennwand zu demjenigen Raum hindurchgeführt ist, in welchem sich die Regelvorrichtung befindet, auf den Boden gelegt, weil keine geeignete Halterungsmöglichkeit für den Fühler vorgesehen war. Da sich die Regelvorrichtung üblicherweise seitlich neben dem Garraum bzw. Innenraum der Vorrichtung befindet, hat man den Fühler durch diese Wand hindurchgeführt, weil dies der kürzeste Weg ist. Auf dem Boden des Garraumes befinden sich aber üblicherweise Flüssigkeitsgemische aus Wasser, Fett und Gewürzen und im Falle einer Reinigung des Gerätes sind hier scharfe Reinigungsmittel anzufinden, wodurch der Fühler Einwirkungen ausgesetzt ist, die zu einem vorzeitigen Ausfall seiner Funktion führen können. Bei dieser Art der Einführung des Fühlers mit seinem Kabel in den Garraum besteht auch die Möglichkeit, daß dieser beim Fallenlassen auf dem Boden beschädigt wird, da die eigentliche Meßsonde gegen Schlag sehr empfindlich ist. Beim Versuch, den Fühler in einem Bereich unterzubringen, in welchem er das Beschicken und Entnehmen des Garraumes nicht behindert, gerät dieser Fühler häufig in die Nähe der Heizung oder des Lüfters, wodurch er ebenfalls einer höheren Beschädigungsgefahr ausgesetzt ist. Dieser lose im Gerät sich befindende Fühler kann auch leicht an einem Rost, auf dem die Nahrungsmittel aufliegen, hängenbleiben, so daß beim Herausholen des Rostes der Fühler abgerissen wird. Die gleiche Gefahr besteht bei größeren Geräten, bei denen die Nahrungsmittel auf einem Wagen in die Geräte hineingebracht und aus diesen herausgeholt werden.

Aufgabe der Erfindung ist es, den Fühler gegen Beschädigung und dadurch vor einem vorzeitigen Ausfall zu schützen und seine Handhabung zu erleichtern und sicher zu gewährleisten.

Diese Aufgabe wird ausgehend von einer Vorrichtung der eingangs erläuterten Art entsprechend dem Oberbegriff des Patentanspruchs 1 erfindungsgemäß dadurch gelöst, daß das Kabel in dem der Anschlagseite der Beschickungstür zugewandten Bereich in den Innenraum eingeführt ist und daß der am freien Ende des Kabels angeordnete Fühler mittels eines an der Innenseite der Beschickungstür angeordneten Halters festlegbar ist.

Vorzugsweise ist der Halter in der Nähe der Anschlagseite der Beschickungstür angeordnet.

Dabei kann in vorteilhafter Weise das Kabel entweder durch die Decke oder im oberen Bereich der Seitenwand in den Innenraum eingeführt sein.

Die beiden Ausführungsvarianten unterscheiden sich dadurch, daß das Kabel einmal durch die Decke und zum anderen Mal durch die Seitenwand in deren oberen Bereich hindurchgeführt wird. In beiden Fällen befindet sich die Durchführungsstelle in den Behandlungsraum vorzugsweise im Bereich der Anschlagseite der Beschickungstür, wodurch das Kabel in Verbindung mit der Tatsache, daß der Fühler bei Nichtgebrauch in einen Halter in der Tür eingesteckt werden kann, beim Öffnen der Tür an der Seitenwand des Gerätes anliegt und dadurch das Entnehmen der Substanzen und das Beschicken des Gerätes nicht mehr behindert, weil der Fühler durch seine Halterung in der Tür beim Öffnen der Tür aus dem Gerät heraus und seitlich neben die Öffnung des Gerätes geführt wird. Hierdurch nimmt er das Kabel in der Weise mit, daß es sich eng an die Seitenwand anlegt. Durch die Halterung des Fühlers mittels eines an der Tür ausgebideten Halters ist der Fühler den Einwirkungen innerhalb des Gerätes außerhalb der üblichen Benutzungszeiten, in denen er innerhalb der Substanzen steckt, entzogen. Ein Herumliegen auf dem Boden ist hiermit vermieden und außerdem ist auch die Gefahr des Abreißens des Fühlers beim Entnehmen von Substanzen aus dem Behandlungsraum weitgehend vermieden. Schließlich befindet sich der Fühler für den neuen Einsatz griffbereit außerhalb des Gerätes, d.h. außerhalb der heißen Zone, so daß die Bedienung wesentlich erleichtert wird.

Wenn in vorteilhafter Ausgestaltung der Erfindung die Länge des Kabels einschließlich des Fühlers geringer als der Abstand von der Kabeleinführstelle in den Innenraum zu dessen Boden ist, so ist auch hierdurch bei einem Fallenlassen des Fühlers ein Aufschlagen auf dem Boden nicht mehr möglich. Eine der wesentlichen Beschädigungsursachen sind damit ausgeschaltet.

Um in Verbindung mit der genannten Bemessungsregel eine möglichst enge Anlage des Kabels an der Seitenwand der Vorrichtung zu erhalten, ist in weiterer Ausgestaltung der Erfindung der Halter in der Nähe der unteren Kante der Beschickungstür angeordnet. Hierdurch wird eine unnötig weite Schleife und damit die Gefahr des Abstehens des Kabels von der Seitenwand vermieden.

Um eine möglichst einfache Halterung zu erzielen, ist in weiterer Ausgestaltung der Erfindung der Fühler stiftartig ausgebildet und der Halter nach Art einer Aufnahmehülse geformt, in die der Fühler einsteckbar ist. Der Fühler ist etwa vergleichbar mit einem Füllhalter, der in einen auf dem Schreibtisch stehenden hülsenartigen Halter einsteckbar ist. Es ist aber auch möglich, daß der Halter als eine hülsenartige Tasche in der Beschickungstür ausgebildet ist, so daß dieser Halter nicht über die Innenfläche der Tür hervorsteht.

Diese vorteilhaften Ausgestaltungen sind Weiterbildungen des grundsätzlichen Erfindungsgedankens, der darin besteht, die Kabeldurchführung unabhängig von der Nähe des hinter einer Trennwand befindlichen Regelgerätes so zu legen, daß das Kabel mit dem Fühler in der Nähe der Anschlagseite, d.h. dort, wo die Tür mit Scharnieren am Gehäuse befestigt ist, von oben nach unten herunterhängt und der Fühler dadurch leicht und ohne daß der Benutzer tief in das heiße Gerät hineingreifen muß erfaßt und an der Tür befestigt werden kann, so daß nach vollständigem Öffnen der Tür der Halter und ein Teil des Kabels aus dem Innenraum herausgeführt sind und der Rest des Kabels möglichst eng an der Innenwand anliegt, wodurch eine Störung durch das Kabel vermieden und eine Beschädigung des Fühlers weitgehend ausgeschlossen ist. Dies erfordert zwar in der Regel ein längeres Kabel, doch ist die Mehrlänge hinter einer Trennwand oder Innenverkleidung verlegt, so daß sie keinerlei Beeinträchtigungen unterliegt und auch im Innenraum nicht stören kann.

In der folgenden Beschreibung zweier Ausführungsbeispiele wird auf die Zeichnung Bezug genommen. In dieser zeigen:

Fig. 1 eine schaubildliche Darstellung einer Vorrichtung zur Wärmebehandlung von Nahrungsmitteln mit einer Fühleranordnung; und

Fig. 2 eine der Fig. 1 entsprechende Darstellung der Vorrichtung zur Wärmebehandlung von Nahrungsmitteln mit einer abgeänderten Fühleranordnung.

In der Zeichnung ist ein schrankartiges Gehäuse 1 mit einer mittels Scharnieren 2 an der rechten Seite (d.h. der Anschlagseite 2a) desselben angeschlagenen Beschickungstür 3 dargestellt, welche den insgesamt mit 4 bezeichneten Innenraum abzuschließen gestattet. Das Gehäuse ist doppelwandig ausgeführt und weist zwischen seiner insgesamt mit 5 bezeichneten Außenschale und seiner insgesamt mit 6 bezeichneten Innenschale eine nicht dargestellte Wärmeisolierung auf. Die Rückwand 7 ist mit einer Lüfteröffnung 8 versehen, durch welche ein Wärmeträger z.B. Luft, ein Luftdampfgemisch oder ausschließlich Dampf in den Innenraum 4 einführbar sind. Hinter der Rückwand 7 befindet sich die bei solchen Geräten notwendigen Einrichtungen wie z.B. Heizung, Dampferzeuger, Kondensatoren und Regelvorrichtungen. Selbstverständlich können diese Einrichtungen auch an einer Seitenwand oder ebenso an der Decke des Gehäuses in einer entsprechenden Gehäuseverkleidung vorgesehen sein. Zur Vereinfachung der Zeichnung sind Schalter, Türverschlüsse, Kontrolleuchten und dergleichen, wie sie bei solchen Geräten üblicherweise vorgesehen sind, weggelassen.

Je nach Größe der Vorrichtung zur Wärmebehandlung, d.h. des schrankartigen Gehäuses, sind entweder Auflagen 9 für Roste zur Aufnahme von Nahrungsmitteln vorgesehen oder es besteht bei entsprechend großen Vorrichtungen die Möglichkeit, daß ein mit entsprechenden Rostauflagen versehener Wagen insgesamt in das Gehäuse einfahrbar ist, wodurch das Beschicken und Entnehmen der Nahrungsmittel erleichtert wird. Durch ein in der Tür vorgesehenes Beobachtungsfenster 10 läßt sich zusätzlich zu den vorhandenen Kontrolleinrichtungen der Behandlungsprozeß überwachen.

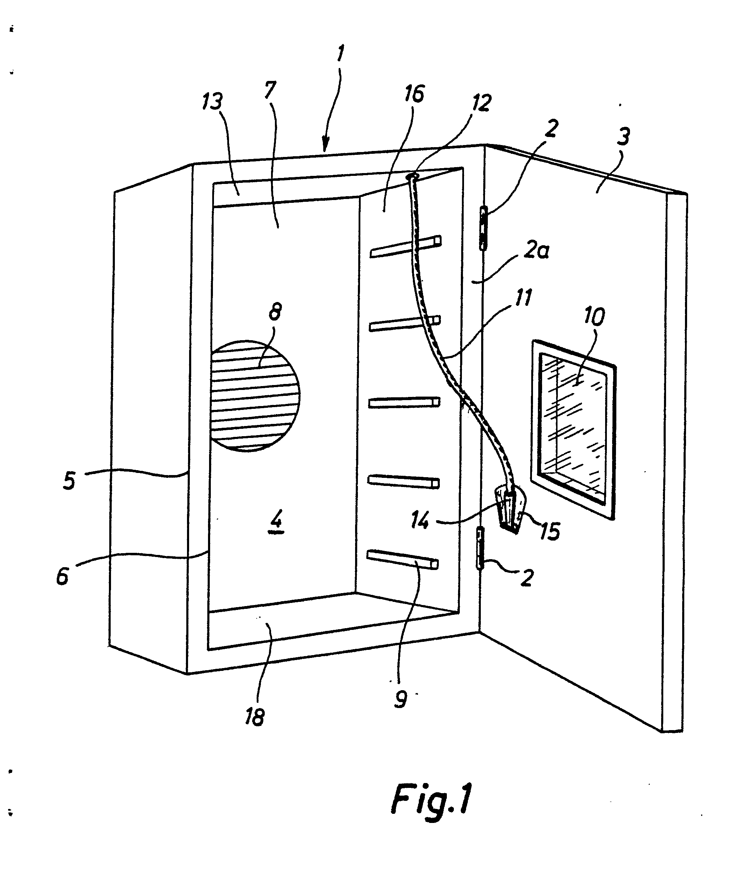

Bei der Ausführungsform nach Fig. 1 ist ein Kabel 11 durch eine Kabeldurchführung 12 hindurchgeführt, die in der inneren Deckenverkleidung 13 des Gehäuses 1 in der Nähe der Anschlagseite 2a eingesetzt ist. Der nicht sichtbare Teil des Kabels 11 ist zwischen der inneren Deckenverkleidung und der äußeren Schale hinter die Rückwand 7 zu der dort nicht dargestellten Regelvorrichtung geführt. Das Kabel 11 trägt an seinem freien Ende einen Fühler 14, welcher im Falle des Nichtgebrauchs in einen Halter 15 einführbar ist, welcher als eine hülsenartige Tasche in der Beschickungstür 3 ausgeführt ist, d.h. die hülsenartige Tasche ist in der Beschickungstür 3 versenkt ausgeführt.

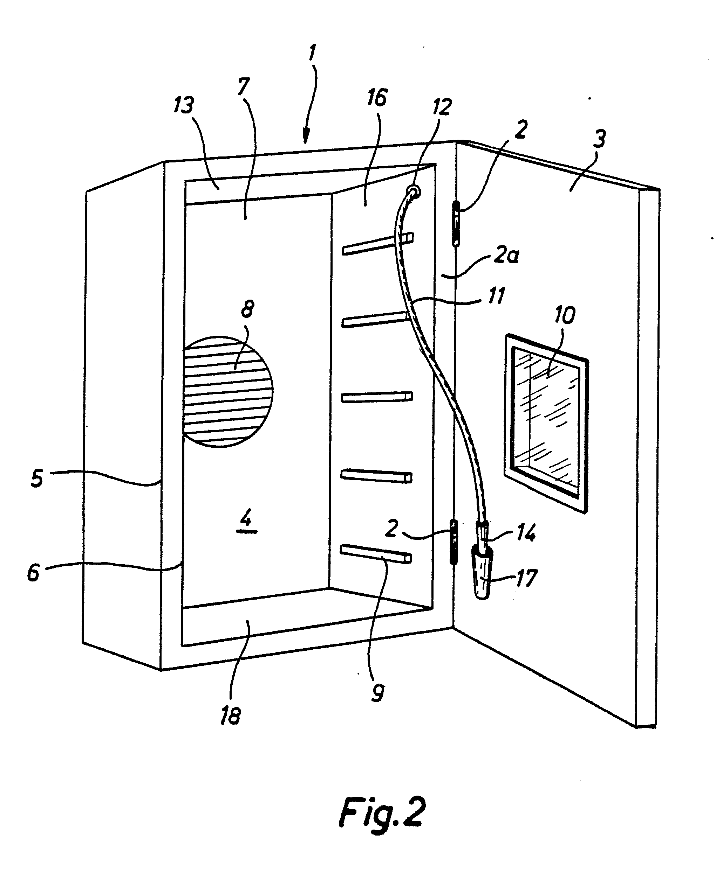

Die Ausführungsform nach Fig. 2 unterscheidet sich von derjenigen nach Fig. 1 dadurch, daß die Kabeldurchführung 12 für das Kabel 11 im oberen Bereich der Seitenwand 16 vorgesehen ist und zwar ebenfalls in der Nähe der Anschlagseite 2a der Vorrichtung, d.h. in der Nähe derjenigen Stirnkante des Gerätes, an der die Scharniere 2 für die Beschickungstür 3 befestigt sind. Der Fühler 14 ist im vorliegenden Falle in einen Halter 17 eingesteckt, der als Aufnahmehülse ausgebildet und an der Innenseite der Beschickungstür befestigt ist. Der Fühler 14 ist dabei nach Art eines Stiftes oder Kugelschreibers ausgebildet, so daß er in den hülsenartigen Halter ebenso wie bei der Ausführungsform nach Fig. 1 leicht eingeführt werden kann, wobei zur Erleichterung dieses Einführens der Halter konisch ausgeführt sein kann und zwar mit zunehmender Verengung nach unten.

Die Länge des Kabels 11 einschließlich des Fühlers 14 ist in beiden Ausführungsformen so bemessen, daß sie kürzer als der Abstand von der Kabeldurchführung 12 bis zum Boden 18 des Gerätes ist.

## Ansprüche

1. Vorrichtung zur Wärmebehandlung von Substanzen, insbesondere Nahrungsmitteln, mit einem Fühler (14) zur Regelung zumindest eines der Parameter eines Wärmeträgers, z.B. der Temperatur, der Menge oder der Strömungsgeschwindigkeit, insbesondere mit einem in die Substanz einführbaren Kerntemperaturfühler sowie mit einer außerhalb des für die Substanzen vorgesehenen Innenraums (4) angeordneten Regelvorrichtung, die mit dem Fühler (14) mittels eines Kabels (11) verbunden ist, wobei der Innenraum durch eine Beschickungstür (3) verschließbar ist, dadurch gekennzeichnet, daß das Kabel (11) in dem der Anschlagseite (2a) der Beschickungstür (3) zugewandten Bereich in den Innenraum eingeführt (12) ist und daß der am freien Ende des Kabels (11) angeordnete Fühler (14) mittels eines an der Innenseite der Beschickungstür (3) angeordneten Halters (15, 17) festlegbar ist.

2. Vorrichtung nach Anspruch 1, dadurch gekennzeichnet, daß der Halter (15, 17) in der Nähe der Anschlagseite (2a) angeordnet ist.

3. Vorrichtung nach Anspruch 1 oder 2, dadurch gekennzeichnet, daß das Kabel (11) durch die Decke (13) des Innenraumes in diesen eingeführt (12) ist.

4. Vorrichtung nach Anspruch 1 oder 2, dadurch gekennzeichnet, daß das Kabel (11) im oberen Bereich der Seitenwand (16) in den Innenraum eingeführt ist.

5. Vorrichtung nach einem der Ansprüche 1 bis 4, dadurch gekennzeichnet, daß die Länge des Kabels (11) einschließlich des Fühlers (14) geringer als der Abstand von der Kabeleinführstelle (12) in den Innenraum bis zu dessen Boden (18) ist.

6. Vorrichtung nach einem der Ansprüche 1 bis 5, dadurch gekennzeichnet, daß der Halter (15, 17) in der Nähe der unteren Kante der Beschickungstür (3) angeordnet ist.

7. Vorrichtung nach einem der Ansprüche 1 bis 6, dadurch gekennzeichnet, daß der Fühler (14) stiftartig ausgebildet und der Halter (15) nach Art einer Aufnahmehülse geformt ist, in die der Fühler (14) einsteckbar ist.

8. Vorrichtung nach einem der Ansprüche 1 bis 6, dadurch gekennzeichnet, daß der Halter (17) als eine hülsenartige Tasche in der Beschickungstür (3) ausgebildet ist.

Fig.1

**Fig.2**